(19) Europäisches Patentamt
European Patent Office
Office européen des brevets

(11) **EP 1 694 137 B1**

(12) **EUROPEAN PATENT SPECIFICATION**

(45) Date of publication and mention
of the grant of the patent:
**24.12.2008 Bulletin 2008/52**

(51) Int Cl.:
***A23K 1/175*** *(2006.01)*     ***A23K 1/18*** *(2006.01)*

(21) Application number: **04812335.0**

(22) Date of filing: **24.11.2004**

(86) International application number:
**PCT/US2004/039795**

(87) International publication number:
**WO 2005/053420 (16.06.2005 Gazette 2005/24)**

(54) **METHOD TO REDUCE STOOL ODOR OF COMPANION ANIMALS**

VERFAHREN ZUR VERRINGERUNG DES EXKREMENTGERUCHS VON HEIMTIEREN

PROCEDE DE REDUCTION DE L'ODEUR DES EXCREMENTS D'ANIMAUX DE COMPAGNIE

(84) Designated Contracting States:
**AT BE BG CH CY CZ DE DK EE ES FI FR GB GR HU IE IS IT LI LU MC NL PL PT RO SE SI SK TR**

(30) Priority: **26.11.2003 US 525306 P**

(43) Date of publication of application:
**30.08.2006 Bulletin 2006/35**

(73) Proprietor: **Hill's Pet Nutrition, Inc.**
**Topeka, KS 66603 (US)**

(72) Inventors:
 • **KHOO, Christina**
  **Lawrence, KS 66049 (US)**
 • **GROSS, Kathy**
  **Topeka, KS 66618 (US)**
 • **SCHERL, Dale**
  **Lawrence, KS 66049 (US)**

(74) Representative: **van Loon, C.J.J. et al**
**Vereenigde**
**Johan de Wittlaan 7**
**2517 JR Den Haag (NL)**

(56) References cited:
 WO-A-00/03606     WO-A-01/17364
 WO-A-98/56263     WO-A-02/051443
 WO-A-20/04030467   US-A- 5 339 771
 US-A- 5 405 836

 • **DATABASE WPI Section Ch, Week 200363 Derwent Publications Ltd., London, GB; Class D13, AN 2003-666418 XP002329003 & JP 2003 092998 A (HARUMI SANGYO KK) 2 April 2003 (2003-04-02)**
 • **PATENT ABSTRACTS OF JAPAN vol. 2003, no. 05, 12 May 2003 (2003-05-12) & JP 2003 023973 A (IT COM HIGASHI NIPPON KK), 28 January 2003 (2003-01-28)**
 • **GIFFARD C. J. ET AL: "Administration of charcoal, Yucca schidigera and zinc acetate to reduce malodorous flatulence in dogs" JOURNAL OF THE AMERICAN VETERINARY MEDICAL ASSOCIATION, vol. 218, no. 6, 15 March 2001 (2001-03-15), pages 892-896, XP008047181 cited in the application**
 • **PATENT ABSTRACTS OF JAPAN vol. 012, no. 198 (C-502), 8 June 1988 (1988-06-08) & JP 63 000266 A (TAKASAGO CORP), 5 January 1988 (1988-01-05)**
 • **PATENT ABSTRACTS OF JAPAN vol. 005, no. 164 (C-076), 21 October 1981 (1981-10-21) & JP 56 092745 A (HIROSAKI ARATA), 27 July 1981 (1981-07-27)**

**Description**

FIELD OF THE INVENTION

The present invention relates to a use of a zinc ion source to stool odor in a companion animal.

BACKGROUND OF THE INVENTION

Stool odor in companion animals is an unpleasant reality of living with pets. For owners of animals that live indoors, especially cats and dogs that use litter boxes or are confined to kennels or other small spaces, this problem is particularly unpleasant. Cat litter containing deodorizers has been developed, however this is an imperfect solution to the problem. Stool odor in animals is partially a result of indigestion and microbial fermentation caused by inappropriate bacterial activity, inflammation and poor digestion or motility.

Giffard. et al. (2001) Journal of the American Veterinary Medical Association 218(6), 892-896 describe the effect of zinc acetate on flatulence in dogs. Zinc acetate reportedly decreased total gas production, number of flatulent episodes and odor of gas.

International Patent Publication No. WO 01/17364 discloses a functional additive for a pet food that includes a combination of yucca extract, charcoal and a zinc salt such as zinc acetate and is said to reduce flatulence odor in a pet animal,

Suarez et al. (1998) Gut 43, 100-104 describe use of zinc acetate to reduce - sulfur gas content from human flatulence.

U.S. Patent No. 5,405,836 discloses a breath freshening pet biscuit comprising zinc salt topically applied to the biscuit. The zinc reportedly binds volatile sulfur compounds found in the mouth forming a non-volatile entity. WO-A-01/17364 describes a functional additive for a pet food that includes a zinc salt to reduce flatulence odor. JP-A-2003 023 973 provides a drinking water for pets, which prevents body small and excretal odours. Said drinking water comprises a proper amount of a natural mineral active wave motion water which contains among other zinc.

SUMMARY OF THE INVENTION

This invention is directed to the use of a stool odor reducing effective amount of a zinc source in the manufacture of a composition to be ingested by a companion for reducing stool odor of the animal. In a preferred embodiment, the companion animals are cats and dogs.

The composition manufactured can be, for example, a food, supplement, treat, snack or toy.

The composition optionally further comprises one or more odor reducing agents other than a zinc ion source, for example those disclosed hereinbelow. The combination of a zinc ion source and one or more additional odor reducing agents in a composition fed to a companion animal can, according to certain embodiments of the invention, have a superior effect on reducing stool odor.

Advantages and benefits of the present invention will be apparent to one skilled in the art from reading this specification.

DETAILED DESCRIPTION

The term "stool" herein is used generically to refer to feces.

The term "zinc ion source" refers to any zinc compound that provides zinc ions or releases zinc ions upon ingestion by an animal. The zinc ion source should be selected to be in la form acceptable for inclusion in an animal food or for oral administration to an animal in an amount contemplated herein, for example it should not be toxic or otherwise deleterious to animal health. Zinc ion sources include but are not limited to zinc salts, zinc oxide and zinc-polymer complexes.

Zinc salts useful herein include but are not limited to zinc acetate, zinc citrate, zinc gluconate, zinc ascorbate, zinc glycinate, zinc sulfate, and sodium zinc citrate. Where zinc acetate is specifically indicated herein, it will be clear to one skilled in the art that any gastrointestinally acceptable zinc ion source, including zinc salts other than zinc acetate, can be substituted if desired.

It has been found in accordance with this invention that a zinc ion source can be surprisingly effective in reducing stool odor in animals when included in the animal's diet. Without being held to a particular theory, it is believed that zinc ion reduces the level of odor producing compounds including heterocycles, thiols, sulfides, indoles, aldehydes and phenols present in feces, and in this way reduces stool odor.

It is further contemplated in accordance with the present invention that additional odor reducing agent(s), when used in combination with a zinc ion source, can be useful in reducing stool odor in companion animals such as cats and dogs. In various embodiments, such additional odor reducing agent(s) are selected from the group consisting of fibers, minerals, herbs and spices, extracts of herbs and spices, probiotics, enzymes and proteins.

Illustratively, among herbs and spices that can be used together with a zinc ion source are rosemary, garlic, caraway, dove wheat, chickweed, banana, marjoram, camomile, nutmeg, allspice, cumin, tarragon, thyme, licorice, basil, celery seed, lemon balm, lavender, fennel, anise, nettle, echinacea and yucca, for example Mohave yucca (*Yucca schidigera*). Extracts of herbs and spices that can be used together with a zinc ion source illustratively include essential oils, for example selected from the group consisting of oils of lemon, peppermint, thyme, vanilla, citrus, cinnamon, eucalyptus, lavender, clove and oregano- Additional plant extracts that can be used according to the invention are listed in U.S. Patent No. 5,401,502.

Without being held to a particular theory, it is believed that odor binding compounds, compounds that mask odors, compounds that reduce odor through microbial modulation, anti-inflammatory means, or enzymatic modulation, and compounds that reduce odor through modification of nitrogen metabolism or binding of ammonia, when used in combination with a zinc ion source, can in some cases have an additive, complementary or synergistic effect on reducing stool odor.

It is contemplated that the use of this invention can be useful for a variety of companion animals (*e.g.*, dogs, cats, horses, e*tc.*), including farm animals (*e.g*, goats, sheep, swine, cattle, *etc.*), domestic birds such as canaries, parrots, *etc.*, and rodents (*e.g.*, hamsters, guinea pigs, gerbils, rabbits, hedgehogs, ferrets, chinchillas, *etc.*).

In some embodiments of this invention, the animal is a cat.

In other embodiments of this invention, the animal is a dog.

This invention contemplates the manufacture of a variety of compositions using a zinc ion source, alone or in combination with other odor reducing agents including those listed above. Contemplated compositions include, for example, foods, supplements, treats, snacks, toys (typically chewable and consumable toys), beverages and high-moisture gels. Alternatively, a composition comprising a zinc ion source can be administered in oral unit dosage form such as a pill, tablet, gel, or capsule.

In general, the invention will be found useful for food compositions that comprises, on a dry matter basis, 0 to 50% by weight of carbohydrate; 5% to 70% by weight of protein; 2% to 50% by weight fat; and 0 to 15% by weight of nutritional balancing agents.

A zinc ion source should be used in the composition in an amount effective to reduce stool odor when the composition is used according to the present use. For example, the amount of the zinc ion source, for example zinc acetate or other zinc salt, in a composition of this invention can be an amount providing 75 to 3000 ppm zinc ion. One of skill in the art will, by routine testing based on the disclosure herein, readily establish an amount of a particular zinc ion source equivalent in effectiveness to an amount of zinc acetate in the above range.

A "zinc acetate equivalent amount" herein is the amount of a particular zinc ion source that is equivalent in its stool odor reducing effect to a stated amount of zinc ion in the form of zinc acetate.

In one embodiment of the invention, the composition is an animal food comprising a zinc ion source and fiber. Fibers are important food constituents that help modulate gut motility through various mechanisms such as water holding capacity, physical bulking, fuel for the gut bacteria, change in viscosity, etc. Example of fibers include, but are not limited to, cellulose, hemicellulose, citrus pulp, barley, bran, bananas, oat fiber, mannan-oligosaocharide, pectin, xylooligosaccharide, burdock, beet pulp, insulin, arabinogalactan, oligosaccharides from gums, galactose, other xylans, fructans dextrans, resistant searches, etc. The fibers should generally be present at levels of 0.1% to 20%, for example 1% to 11%, by weight of the composition.

In various embodiments, the composition of the fiber can be 100% non-fermentable fiber, 100% moderately fermentable fiber or 100% highly fermentable fiber.

In other embodiments, the composition of the fiber can include at least 0.1% by weight, for example at least 10%, at least 20%, or at least 60%, of the total fiber composition in the form of non-fermentable fiber. In certain embodiments, the fiber comprises 10% to 80%, for example 40% to 60%, by weight of the total fiber composition in the form of fermentable fiber, with the balance being non-fermentable fiber.

In certain embodiments, the composition of the fiber includes 5% to 50%, for example 10% to 15%, by weight of the total fiber composition of moderately fermentable fiber.

In certain embodiments, the composition of the fiber includes 0% to 20%, for example 10% to 15%, by weight of the total fiber composition in the form of highly fermentable fiber.

Non-fermentable fibers include but are not limited to cellulose, oat fiber, hemicellulose and peanut hulls.

Moderately fermentable fibers include but are not limited to beet pulp, citrus pulp, resistant starches, some gums, galactooligosaccharides, mannan-oligosaccharide, burdock, rice bran, soy fiber, oat glucans, *etc.*

Highly fermentable fibers include but are not limited to gums, pectins and certain oligosaccharides such as Xylooligosaccharides. Gums can include gums produced by microorganisms including but not limited to gellan and xanthan gums, and gums produced by plants such as acacia (gum arabic).

The fiber composition should have an organic matter disappearance or fermentability of 0% to 80%, although individual fiber components or fibers used individually can have fermentability ranging from 0% to 100%. "Organic matter disappearance" is the percentage of the organic matter that is lost by fermentation when a fiber composition is incubated *in vitro* with fecal matter from an animal for 12-24 hours at or close to physiological body temperature, and is calculated as:

$$\{1\text{-}[(\text{organic matter residue} - \text{organic matter blank})/\text{initial organic matter}]\} \times 100.$$

Typically, the zinc ion source and other, optional, odor reducing agent(s) of the composition are present at concentrations that do not impart an aroma or flavor that causes the animal to perceive the composition to be unacceptable for consumption, or otherwise refuse, reject or be inhibited from ingesting the composition. However, even where such concentrations are exceeded, a desirable aroma and flavor can often be achieved using aroma or flavor enhancers, for example to mask the aroma or flavor of the zinc ion source.

The zinc ion source and other, optional, odor reducing agent(s) of the composition should be present at concentrations that are not deleterious to the animal's health. Thus, for example, zinc acetate should be present at a concentration that does not cause undesirable effects on digestion, particularly long term effects lasting several days or longer. Undesirable effects on digestion can include, for example, constipation or diarrhea.

In one embodiment, the composition is a food supplement comprising a zinc ion source, alone or in combination with one or more additional odor reducing agents. Supplements include, for example, a feed or pet food used with another feed or pet food to improve the nutritive balance or performance of the total. Contemplated supplements include compositions that are fed undiluted as a supplement to other feeds or pet foods, offered free choice with other parts of an animal's ration that are separately available, or diluted and mixed with an animal's regular feed or pet food to produce a complete feed or pet food. The AAFCO, for example, provides a discussion relating to supplements in the American Feed Control Officials, Inc. Official Publication, p. 220 (2003). Supplements can be in various forms including, for example, powders, liquids, syrups, pills, encapsulated compositions, *etc.*

In another embodiment, the composition is a treat comprising a zinc ion source, alone or in combination with one or more additional odor reducing agents. Treats include, for example, compositions that are given to an animal to entice the animal to eat during a non-meal time. Contemplated treats for canines include, for example, dog biscuits in the shape of dog bones. Treats can be nutritional, wherein the composition comprises one or more nutrients, and can, for example, have a composition as described above for food. Non-nutritional treats encompass any other treats that are non-toxic. The zinc ion source, for example, can be coated onto the treat, incorporated into the treat, or both.

In another embodiment, the composition is a toy comprising a zinc ion source, alone or in combination with one or more additional odor reducing agents. Toys include, for example, chewable toys. Contemplated toys for dogs include, for example, artificial bones. The zinc ion source can be present in a coating on the surface of the toy or on the surface of a component of the toy, or can be incorporated partially or fully throughout the toy, or both. In a contemplated embodiment, the zinc ion source is orally accessible by the intended user.

Illustrative toys suitable for modification in accordance with the invention are disclosed in the patents individually cited below.

U.S. Patent No. 5,339,771 and references disclosed therein.

U.S. Patent No. 5,419,283 and references disclosed therein.

It should be recognized that this invention contemplates both partially consumable toys (*e.g.*, toys comprising plastic components) and fully consumable toys (*e.g.*, rawhides and various artificial bones).

The terms "treat" and "toy" can be considered interchangeable for the purposes of this specification. However, in general a treat is fully edible and a toy in accordance with the invention has an edible coating.

In another embodiment, the composition is an aqueous pet beverage. The zinc ion source is present in such a beverage typically in dissolved form. The beverage comprises mainly water and optionally further comprises a flavor enhancing agent such as a liver digest.

In another embodiment, the composition is a high-moisture gel or "solid water" composition, for example substantially as disclosed in U.S. Patent No. 6,528,084 but with addition of a zinc ion source, typically in dissolved form. Such a composition can have a jelly-like consistency similar to that of Jell-O® dessert.

In preparing a composition of the present invention, the components of the composition arc adjusted so that the zinc ion source, alone or in combination with one or more additional odor reducing agents, is present in the composition at a desired concentration, typically in an amount providing 75 ppm to 3000 ppm of zinc ion. The zinc ion source can, for example, be incorporated into the composition during formulation processing, such as during and/or after mixing of other components of the composition. Distribution of these components into the composition can be accomplished by any conventional method including standard mixing procedures.

Compositions of the present invention (particularly foods) can be prepared in a canned or wet form using conventional pet food processes. Typical requirements for a nutritionally adequate food composition are:

carbohydrate, 0 to 90%, illustratively 5% to 45%, by weight;
protein, 5% to 70%, illustratively 10% to 60%, by weight;
fat, 2% to 50%, illustratively 5% to 40%, by weight;
total dietary fiber, 0.1% to 20%, illustratively 1% to 11 %, by weight; and
nutritional balancing agents such as vitamins and minerals, 0 to 15%, illustratively 2% to 8%, by weight.

To these ingredients are added one or more stool odor reducing agents such as zinc acetate, in accordance with the invention.

Vitamins and minerals should be included in amounts required to avoid deficiency and maintain health. The National Research Council, for example, gives recommendations for farm animals in Nutrient Requirements of Swine, 10th Revised Edition (1998); Nutrient Requirements of Poultry, 9th Revised Edition (1994); Nutrient Requirements of Horses, 5th Revised Edition (1989), etc. as published by National Academy Press, Washington, DC. AAFCO provides recommendations for dogs and cats in the American Feed Control Officials, Inc. Official Publication (2003), at pp. 126-240.

In one contemplated embodiment, ground animal (*e.g.*, mammal, poultry, and/or fish) proteinaceous tissues are mixed with other ingredients, including for example animal fats and vegetable oils, cereal grains, other nutritionally balancing ingredients, special purpose additives (*e.g.*, vitamin and mineral mixtures, inorganic salts, cellulose and beet pulp, and bulking agents); and water sufficient for processing is also added. These ingredients typically are mixed in a vessel suitable for heating while blending the components. Heating of the mixture can be effected in any suitable manner, such as, for example, by direct steam injection or by using a vessel fitted with a heat exchanger. Following addition of the last ingredient, the mixture is heated to a temperature of 10°C to 100°C. Temperatures outside this range are acceptable, but can be commercially impractical without use of other processing aids. When heated to the appropriate temperature, the material is typically in the form of a thick liquid. The thick liquid is filled into suitable containers such as cans, jars, pouches or the like. A lid is applied, and the container is hermetically sealed. The sealed containers are then placed into conventional equipment designed to sterilize the contents. This is usually accomplished by heating to a temperature of at least 110°C for an appropriate time, which is dependent on, for example, the temperature used and the composition. Products can also be prepared by an aseptic process wherein the contents are heated to commercial sterility before being packaged in sterilized containers.

Compositions of the present invention (particularly foods) can be prepared in a dry form using conventional processes. In one contemplated embodiment, dry ingredients, including, for example, animal protein sources, plant protein sources, grains, *etc.,* are ground and mixed together. Moist or liquid ingredients, including fats, oils, animal protein sources, water, *etc.*, are then added to and mixed with the dry mix. The mixture is then processed into kibbles or similar dry pieces. Nibble is often formed using an extrusion process in which the mixture of dry and wet ingredients is subjected to mechanical work at a high pressure and temperature, and forced through small openings and cut off into kibble by a rotating knife. The wet kibble is then dried and optionally coated with one or more topical coatings which can include, for example, flavors, fats, oils, powders, and the like. Kibble also can be made from the dough using a baking process, rather than extrusion, wherein the dough is placed into a mold before dry-heat processing. Kibble also can be made from a food matrix undergoing pelletization. It is important to note that the zinc ion source, alone or in combination with additional odor reducing agents, can be incorporated into the food composition for example by adding the zinc ion source to the mixture before extrusion or by coating the extruded kibble or pellets with the zinc ion source as an ingredient of a topical coating.

Treats of the present invention can be prepared by, for example, an extrusion or baking process similar to those described above for dry food. Other processes also can be used to either apply a coating comprising a zinc ion source, alone or in combination with one or more additional odor reducing agents, on the exterior of existing treat forms, or to inject the zinc ion source into an existing treat form.

Animal toys of the present invention are typically prepared by coating an existing toy with a composition comprising a zinc ion source, alone or in combination with one or more additional odor reducing agents.

EXAMPLES

The following examples are merely illustrative, and do not limit this disclosure in any way.

Example 1

An experiment was conducted to characterize the effects of zinc acetate on stool odor compounds in dogs. To a control food, which was a dry food composed of kibbles containing a base level of 150 ppm zinc in the form of zinc acetate, various amounts of zinc in the form of zinc acetate were added as a coating on the kibbles. This was done by hand coating (sprinkling) fine zinc acetate powder on the kibble in a rotating drum in a two-step coating process after all other topical ingredients had been added by in-line enrobing. Ten dogs were fed control food with no added zinc, ten dogs were fed control food with 400 ppm zinc added, ten dogs were fed control food with 600 ppm zinc added, and ten dogs were fed control food with 900 ppm zinc added. The dogs were fed one of these diets for three weeks. At the end of three weeks, stool samples were collected and analyzed by putting a standard amount of stool in a glass container and incubating a solid phase microextraction fiber in the headspace. Volatiles bound to the fiber were eluted onto a gas chromatograph for analysis. The compounds were identified using a flame ionization chamber.

The results are shown in Table 1 below. The numbers indicate relative differences as measured by the area under the peak in a chromatogram. The addition of zinc to the food resulted in decreased levels of phenols, thiols and sulfides and indoles. In some instances, low amounts of zinc were able to decrease the level of the stool odor compounds, for example, indoles. In other instances, increasing levels of zinc resulted in decreasing levels of the particular odor compound, for example, phenols and thiols.

**Table 1: Effect of added zinc acetate on stool odor compounds**

|  | Control food | 400 ppm added zinc | 600 ppm added zinc | 900 ppm added zinc |
|---|---|---|---|---|
| Carboxylic acids (x$10^4$) | 5.06 ± 5.33 | 3.79 ± 3.55 | 22.7 ± 32.2 | 27.2 ± 21.2 |
| Esters (x$10^5$) | 39.8 ± 42.7 | 34.3 ± 34.0 | 34.1 ± 34.4 | 32.6 ± 0.9 |
| Heterocycles (x$10^4$) | 1.08 ± 5.97 | 0.94 ± 0.37 | 1.19 ± 0.54 | 1.13 ± 0.49 |
| Phenols (x$10^4$) | 13.6 ± 8.10 | 9.62 ± 6.0 | 9.17 ± 5.64 | 4.08 ± 3.58 |
| Thiols/Sulfides (x$10^4$) | 6.16 ± 6.39 | 8.69 ± 6.16 | 5.14 ± 2.4 | 4.91 ± 1.3 |
| Ketones (x$10^6$) | 256 ± 124 | 179 ± 0.89 | 201 ± 66.5 | 160 ± 63.1 |
| Aldehydes (x$10^3$) | 0.53 ± 0.39 | 0.45 ± 0.3 | 0.56 ± 0.51 | 1.09 ± 1.29 |
| Alcohols (x$10^5$) | 10.0 ± 7.55 | 17.3 ± 12.5 | 12.3 ± 0.9 | 23.4 ± 14.3 |
| Indoles (x$10^4$) | 3.88 ± 2.36 | 2.64 ± 2.19 | 2.0 ± 0.86 | 1.78 ± 2.45 |

Example 2

An experiment was conducted to characterize the effects of zinc acetate on stool odor compounds in cats. To a control food, which was a dry food composed of kibbles containing a base level of 160 ppm zinc in the form of zinc acetate, various amounts of zinc were added in the form of zinc acetate as in Example 1. Eight cats where fed control food with no added zinc, eight cats were fed control food with 860 ppm zinc acetate added, seven cats were fed control food with 1200 ppm zinc acetate added, and seven cats were fed control food with 1800 ppm zinc acetate added. The cats were fed one of these diets for one month. At the end of the month, stool samples were collected and analyzed as described in Example 1.

The results are shown in Table 2 below. The numbers indicate relative differences as measured by the area under the peak in a chromatogram. The addition of zinc to the food resulted in decreased stool levels of heterocyles, indoles, aldehydes and phenols. In some cases, a minimum level of zinc was able to decrease stool odor compounds, particularly indoles and heterocycles. In other cases, higher levels of zinc resulted in a larger decrease, for example in the case of phenol.

**Table 2: Effect of added zinc acetate on stool odor compounds**

|  | Control food | 860 ppm added zinc | 1200 ppm added zinc | 1800 ppm added zinc |
|---|---|---|---|---|
| Carboxylic acids (x$10^4$) | 146 ± 114 | 317 ± 160 | 225 ± 78.1 | 146 ± 144 |
| Esters (x$10^4$) | 59.6 ± 38.8 | 78.4 ± 22.9 | 76.9 ± 47.5 | 28.7 ± 1.8 |
| Heterocycles (x$10^4$) | 0.79 ± 0.13 | 0.62 ± 0.13 | 0.62 ± 0.22 | 0.46 ± 0.17 |
| Phenols (x$10^4$) | 11.8 ± 9.1 | 10.3 ± 4.3 | 12.6 ± 4.7 | 7.2 ± 2.7 |
| Thiols/Sulfides (x$10^4$) | 4.47 ± 3.3 | 6.2 ± 2.3 | 7.7 ± 3.4 | 6.8 ± 3.9 |
| Ketones (x$10^4$) | 93.9 ± 72.5 | 25.6 ± 8.14 | 60.7 ± 38.1 | 42.2 ± 26.2 |

(continued)

| | Control food | 860 ppm added zinc | 1200 ppm added zinc | 1800 ppm added zinc |
|---|---|---|---|---|
| Aldehydes (x10$^4$) | 3.2 ± 1.9 | 5.6 ± 3.6 | 3.6 ± 1.7 | 1.9 ± 1.6 |
| Alcohols (x10$^4$) | 5.6 ± 7.1 | 13.2 ± 27 | 6.87 ± 10.8 | 15.1 ± 23.3 |
| Indoles (x10$^4$) | 3.5 ± 5.7 | 0.39 ± 0.3 | 0.88 ± 0.62 | 2.3 ± 1.5 |

The words "comprise", "comprises", and "comprising" are to be interpreted inclusively rather than exclusively.

## Claims

1. . Use of a stool odor reducing effective amount of a zinc ion source in the manufacture of a composition to be ingested by a companion animal for reducing stool odor of the animal.

2. . The use of Claim 1, wherein the zinc ion source is present in the composition in an amount providing at least 75 ppm zinc ion and not sufficient to cause an adverse effect on digestion of the animal, and preferably an amount providing 75 ppm to 3000 ppm zinc ion.

3. . The use of Claim 1 or 2, wherein the zinc ion source is a zinc salt, which zinc salt is preferably selected from the group consisting of zinc acetate, zinc citrate, zinc gluconate, zinc ascorbate, zinc glycinate, zinc sulfate, and sodium zinc citrate, and which zinc salt more preferably is zinc acetate.

4. . The use of Claim 3, wherein the zinc acetate is present in the composition in an amount providing at least 200 ppm zinc ion, and preferably in an amount providing at least 500 ppm zinc ion.

5. . The use of any one of the preceding claims, wherein the animal is a cat, or a dog.

6. . The use of any one of the preceding claims, wherein the composition is in the form of a food, a treat, a supplement, a toy coating, a beverage, a high-moisture gel, a pill, a tablet, a gel or a capsule.

7. . The use of any one of the preceding claims, wherein the composition further comprises at least one odor reducing agent other than a zinc ion source, said at least one odor reducing agent other than a zinc ion source preferably being selected from the group consisting of fibers, minerals, herbs and spices, extracts of herbs and spices, probiotics, enzymes and proteins; or preferably being a herb or spice selected from the group consisting of rosemary, garlic, ginger, caraway, dove wheat, chickweed, banana, marjoram, chamomile, nutmeg, allspice, cumin, tarragon, thyme, licorice, basil, celery seed, lemon balm, lavender, fennel, annise, nettle, echinacea and yuca; or preferably being an essential oil selected from the group consisting of oils of lemon, peppermint, thyme, vanilla, citrus, cinnamon, eucalyptus, lavender, clove and oregano; or preferably being at least one fiber.

8. . The use of Claim 7, wherein the at least one fiber is selected from the group consisting of cellulose, hemicellulose, citrus pulp, barley, bran, banana, oat fiber, oat glucan, mannan-oligosaccharide, pectin, xylooligosaccharide, burdock, beet pulp, inulin, arabinogalactan and oligosaccharide.

9. . The use of Claim 8, wherein the at least one fiber is present in the composition in an amount of 0.1% to 20% by weight, preferably in an amount of 1% to 11% by weight.

10. . The use of any of Claim 8 or 9, wherein of the total fiber present in the composition, at least 20% by weight is non-fermentable.

## Patentansprüche

1. Verwendung einer zur Verminderung von Stuhlgeruch wirksamen Menge einer Zinkionenquelle zur Herstellung einer Zusammensetzung zur Aufnahme durch ein Haustier, um den Stuhlgeruch des Tieres zu vermindern.

**2.** Verwendung nach Anspruch 1, bei der die Zinkionenquelle in der Zusammensetzung in einer Menge vorhanden ist, die mindestens 75 ppm Zinkionen liefert und nicht ausreicht, um bei Digestion durch das Tier eine nachteilige Wirkung hervorzurufen, und vorzugsweise in einer Menge vorhanden ist, die 75 ppm bis 3000 ppm Zinkionen liefert.

**3.** Verwendung nach den Ansprüchen 1 oder 2, bei der die Zinkionenquelle ein Zinksalz ist, welches vorzugsweise ausgewählt ist aus der Gruppe bestehend aus Zinkacetat, Zinkcitrat, Zinkgluconat, Zinkascorbat, Zinkglycinat, Zink sulfat und Natriumzinkcitrat, und bei der das Zinksalz insbesondere Zinkacetat ist.

**4.** Verwendung nach Anspruch 3, bei der das Zinkacetat in der Zusammensetzung in einer Menge vorhanden ist, die mindestens 200 ppm Zinkionen liefert, und vorzugsweise in einer Menge vorhanden ist, die mindestens 500 ppm Zinkionen liefert.

**5.** Verwendung nach einem der vorhergehenden Ansprüche, bei der das Tier eine Katze oder ein Hund ist.

**6.** Verwendung nach einem der vorhergehenden Ansprüche, bei der die Zusammensetzung in Form einer Nahrung, einer Belohnung, einer Ergänzung, einer Spielzeugbeschichtung, eines Getränks, eines Gels mit hohem Feuchtigkeitsgehalt, einer Pille, einer Tablette, eines Gels oder einer Kapsel vorliegt.

**7.** Verwendung nach einem der vorhergehenden Ansprüche, bei der die Zusammensetzung ferner mindestens ein von einer Zinkionenquelle verschiedenes Geruchsverminderungsmittel umfasst, wobei das mindestens eine von einer Zinkionenquelle verschiedene Geruchsverminderungsmittel vorzugsweise ausgewählt ist aus der Gruppe bestehend aus Fasern, Mineralien, Kräutern und Gewürzen, Extrakten von Kräutern und Gewürzen, Probiotika, Enzymen und Proteinen, oder vorzugsweise ein Kraut oder Gewürz ausgewählt aus der Gruppe bestehend aus Rosmarin, Knoblauch, Ingwer, Kümmel, Taubenweizen, Vogelmiere, Banane, Majoran, Kamille, Muskat, Piment, Kreuzkümmel, Estragon, Thymian, Süßholz, Basilikum, Selleriesamen, Zitronenmelisse, Lavendel, Fenchel, Anis, Nessel, Purpur-Sonnenhut und Yucca ist, oder vorzugsweise ein etherisches Öl ausgewählt aus der Gruppe bestehend aus Ölen von Zitrone, Pfefferminz, Thymian, Vanille, Zitrus, Zimt, Eukalyptus, Lavendel, Gewürznelken und Oregano ist, oder vorzugsweise mindestens eine Faser ist.

**8.** Verwendung nach Anspruch 7, bei der die mindestens eine Faser ausgewählt ist aus der Gruppe bestehend aus Cellulose, Hemicellulose, Zitrusfruchtmark, Gerste, Kleie, Banane, Haferfaser, Haferglucan, Mannan-Oligosaccharid, Pektin, Xylooligosaccharid, Klette, Rübenmus, Inulin, Arabinogalactan und Oligosaccharid.

**9.** Verwendung nach Anspruch 8, bei der die mindestens eine Faser in einer Menge von 0,1 Gew.-% bis 20 Ges.-%, vorzugsweise in einer Menge von 1 Gew.-% bis 11 Gew.-% in der Zusammensetzung vorhanden ist.

**10.** Verwendung nach einem der Ansprüche 8 oder 9, bei der mindestens 20 Gew.-% der Gesamtfasern, die in der Zusammensetzung vorhanden sind, nicht fermentierbar sind.

**Revendications**

**1.** Utilisation d'une quantité efficace d'une source d'ion zinc comme réducteur d'odeur de déjection dans la fabrication d'une composition à ingérer par un animal de compagnie pour réduire l'odeur de déjection de l' animal.

**2.** Utilisation selon la revendication 1, dans laquelle la source d'ion zinc est présente dans la composition en une quantité fournissant au moins 75 ppm d'ion zinc et non suffisante pour provoquer un effet indésirable sur la digestion de l'animal, et de préférence une quantité fournissant 75 ppm à 3 000 ppm d'ion zinc.

**3.** Utilisation selon la revendication 1 ou 2, dans laquelle la source d'ion zinc est un sel de zinc, lequel sel de zinc est de préférence choisi dans le groupe constitué de l'acétate de zinc, du citrate de zinc, du gluconate de zinc, de l' ascorbate de zinc, du glycinate de zinc, du sulfate de zinc et du citrate de sodium et de zinc, et lequel sel de zinc est de manière davantage préférée de l'acétate de zinc.

**4.** Utilisation selon la revendication 3, dans laquelle l'acétate de zinc est présent dans la composition en une quantité fournissant au moins 200 ppm d'ion zinc, et de préférence en une quantité fournissant au moins 500 ppm d'ion zinc.

**5.** Utilisation selon l'une quelconque des revendications précédentes, dans laquelle l'animal est un chat ou un chien.

**6.** Utilisation selon l'une quelconque des revendications précédentes, dans laquelle la composition est sous la forme d'un aliment, d'une gâterie, d'un supplément, d'un revêtement de jouet, d'une boisson, d'un gel à humidité élevée, d'une pilule, d'un comprimé, d'un gel ou d'une capsule.

**7.** Utilisation selon l'une quelconque des revendications précédentes, dans laquelle la composition comprend en outre au moins un agent réducteur d'odeur autre qu'une source d'ion zinc, ledit au moins un agent réducteur d'odeur autre qu'une source d'ion zinc étant de préférence choisi dans le groupe constitué de fibres, de minéraux, d'herbes et d'épices, d'extraits d'herbes et d'épices, de probiotiques, d'enzymes et de protéines ; ou étant de préférence une herbe ou une épice choisie dans le groupe constitué du romarin, de l'ail, du gingembre, du carvi, du blé de colombe, du mouron des oiseaux, de la banane, de la marjolaine, de la camomille, de la noix de muscade, du piment de la Jamaïque, du cumin, de l'estragon, du thym, de la réglisse, du basilic, de la graine de céleri, de la mélisse, de la lavande, du fenouil, de l'anis, de l'ortie, de l'échinacea et du yucca ; ou étant de préférence une huile essentielle choisie dans le groupe constitué d'huiles de citron, de menthe poivrée, de thym, de vanille, d'agrume, de cannelle, d'eucalyptus, de lavande, de clou de girofle et d'origan ; ou étant de préférence au moins une fibre.

**8.** Utilisation selon la revendication 7, dans laquelle au moins une fibre est choisie dans le groupe constitué de la cellulose, de l'hémicellulose, de la pulpe d'agrume, de l'orge, du son, de la banane, de la fibre d'avoine, du glucane d'avoine, du mannan-oligosaccharide, de la pectine, du xylooligosaccharide, de la barbane, de la pulpe de betterave, de l'inuline, de l'arabinogalactan et de l'oligosaccharide.

**9.** Utilisation selon la revendication 8, dans laquelle la au moins une fibre est présente dans la composition en une quantité de 0,1 % à 20 % en poids, de préférence en une quantité de 1 % à 11 % en poids.

**10.** Utilisation selon l'une quelconque des revendications 8 ou 9, dans laquelle la fibre totale présente dans la composition, au moins 20 % en poids, est non fermentable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0117364 A
- US 5405836 A
- JP 2003023973 A
- US 5401502 A
- US 5339771 A
- US 5419283 A
- US 6528084 B

**Non-patent literature cited in the description**

- **GIFFARD et al.** *Journal of the American Veterinary Medical Association,* 2001, vol. 218 (6), 892-896
- **SUAREZ et al.** *Gut,* 1998, vol. 43, 100-104
- American Feed Control Officials. Inc. Official Publication, 2003, 220
- Nutrient Requirements of Swine. 1998
- Nutrient Requirements of Poultry. 1994
- Nutrient Requirements of Horses. National Academy Press, 1989
- AAFCO provides recommendations for dogs and cats in the American Feed Control Officials. Inc. Official Publication, 2003, 126-240